# EUROPÄISCHE PATENTSCHRIFT

(11) **EP 1 241 389 B1**
(45) Veröffentlichungstag und Bekanntmachung des Hinweises auf die Patenterteilung: **28.01.2004**
(21) Anmeldenummer: 02011706.5
(22) Anmeldetag: 18.03.1998
(51) Int. Cl.: F16L 27/111, F01N 7/18

(54) **Leitungselement mit einem Balg aus Metall**
Pipe member having a metal bellow
Elément de tuyau avec soufflet métallique

(30) Priorität: 23.09.1997 DE 19742875
(43) Veröffentlichungstag der Anmeldung: 18.09.2002
(62) Teilanmeldung aus: 98104867.1
(73) Patentinhaber: Volkswagen AG, 38436 Wolfsburg (DE)
(72) Erfinder: Elsässer, Fabian, 75334 Straubenhardt (DE); Krawietz, Tom, 75217 Birkenfeld (DE); Pape, Karl, 38442 Wolfsburg (DE)

(56) Entgegenhaltungen:
- EP-A- 0 770 808

## Beschreibung

Die Erfindung betrifft ein Leitungselement, insbesondere für Abgas- und Abgasrückführleitungen von Verbrennungsmotoren bei Kraftfahrzeugen, mit einem mit zylindrischen Anschlußenden versehenen Leitungsteil aus Metall, das wenigstens einen mit zylindrischen Anschlußenden versehenen, schraubengangförmig oder ringgewellten flexiblen Balg enthält, und einem koaxial zum Balg auf dessen Außenseite angeordneten Geflechtsschlauch aus Metalldraht, wobei Leitungsteil und Schlauch fest miteinander zumindest mittelbar verbunden sind und der Innendurchmesser des Schlauches im wesentlichen dem freien Außendurchmessers des Leitungsteiles entspricht. Ein solches Leitungselement ist aus EP-A-0 770 808 bekannt.

Die Bälge sind entweder absolut dicht aus einem Rohr oder praktisch dicht durch schraubengangförmiges Wickeln eines vorprofilierten Metallbandes hergestellt. Die Leitungselemente dienen der absolut oder praktisch fluiddichten, insbesondere gasdichten flexiblen Verbindung zweier beidseitig anschließender Leitungen, im bevorzugten Falle der flexiblen Verbindung innerhalb der Abgasleitung eines Kraftfahrzeuges, wo die Leitungselemente die Aufgabe haben, Bewegungen insbesondere des Motors zuzulassen und die Motorschwingungen vom Fahrgastraum abzukoppeln.

Dabei kann das Leitungsteil und insbesondere der Balg je nach erforderlicher Flexibilität ein- oder mehrwandig ausgebildet sein, wobei bei mehrwandiger Ausbildung auch die einzelnen Wandlagen beispielsweise im Hinblick auf Korrosionsbelastungen aus unterschiedlichen Materialien bestehen können. Hinsichtlich des Querschnittes des Leitungsteiles kommen nicht nur kreisrunde Bauformen in Frage, sondern insbesondere auch ovale Bauformen, wenn dies beispielsweise aus Platzgründen wünschenswert ist.

Üblicherweise dient der Außengeflechtsschlauch bei den vorstehend genannten Leitungselementen dazu, diese gegen Axialzugbelastungen abzustützen. Inzwischen werden die Abgasanlagen aber häufig so gestaltet, daß die vorliegenden Leitungselemente nicht mehr selbst für die Axialabstützung sorgen müssen, sondern dies durch separate Bauteile in der Abgasanlage erfolgt. Beispielsweise werden die hier vorliegenden Leitungselemente hinter oder vor Katalysatoren eingebaut, wobei die Schlauchleitungen durch Aufhängungen abgestützt sind. Dies führt nun dazu, daß der Geflechtsschlauch - da er keine Stützfunktion mehr erfüllen muß - für andere Aufgaben herangezogen werden kann.

Im bekannten Falle sitzt nun allerdings der keine Axialabstützung mehr gewährleistende Außengeflechtsschlauch mit Ausnahme seiner Befestigungen entweder beabstandet von oder aber bevorzugterweise direkt an insbesondere beiden Anschlußenden mehr oder weniger lose auf dem Leitungselement, so daß er nicht in der Lage ist, über das vorstehend Gesagte hinausgehende Funktionen zu übernehmen. Insbesondere vermag er nicht, unmittelbar auf Schwingungen des Balges und damit des Leitungsteiles selbst Einfluß zu nehmen, die in der Weitergabe von Schwingungen zwischen den anschließenden Leitungen sowie dem Resonanzschwingungsverhalten des Balges bzw. des Leitungselementes bestehen. Derartige Schwingungen führen zu akustischen Begleiterscheinungen, die insbesondere von Seiten des Fahrgastraumes als unangenehm empfunden werden.

Aufgabe der Erfindung ist es daher, ein Leitungselement der eingangs genannten Art derart weiterzubilden, daß ohne Behinderung der Beweglichkeit des Leitungsteiles und grundsätzlich ohne zusätzliche Bauteile und einer damit einhergehenden Gewichtsvermehrung das Schwingungsverhalten des Balges und damit des Leitungsteiles im Sinne einer Verringerung der akustischen Begleiterscheinungen und einer Erhöhung der Lebensdauer verbessert wird.

Diese Aufgabe ist erfindungsgemäß gelöst durch die Merkmale von Anspruch 1.

Dabei kann nach einer allgemein üblichen Bauform das Leitungsteil überhaupt bzw. ausschließlich durch ein gewelltes Metallrohr mit den genannten Anschlußenden gebildet sein.

Hier kann nunmehr mit der erfindungsgemäßen Maßnahme der äußere Schlauch die Aufgabe einer Bedämpfung des Balges bzw. mehrerer hintereinander geschalteter und gegebenenfalls über Zwischenrohre miteinander verbundener Bälge übernehmen, so daß das Leitungsteil in ihn eingeleitete Schwingungen nicht mehr weitergibt sowie bezüglich seines Resonanzschwingungsverhaltens derart verstimmt ist, daß solche Resonanzschwingungen erst gar nicht entstehen können. Dazu ist der Schlauch jetzt wirksam gegen die Balgaußenkrempen und/oder das Zwischenrohr in Anlage gebracht.

Die dämpfende Wirkung des Außengeflechtsschlauches kann durch die Wahl der Größe der Vorspannkraft sowie durch die Ausdehnung und Anordnung der Bereiche der reibenden Anlage zwischen Schlauch und Leitungsteil den jeweiligen Erfordernissen leicht angepaßt werden, so daß auf der einen Seite eine ausreichende Dämpfung erzielt wird, auf der anderen Seite aber zwischen Leitungsteil und Schlauch kein unnötig hoher Reibverbund und damit Verschleiß entsteht.

Vorteilhafterweise ergibt sich also durch den dämpfenden Geflechtsschlauch, daß die Nachteile bestehender Leitungselemente, die mangels Stützfunktion weicher und mit geringerer Steifigkeit gebaut sind und somit eine Eigenresonanz im Motordrehzahlspektrum verbunden mit entsprechend starken Geräuschentwicklungen aufweisen, beseitigt werden können, was in einfacher Weise durch Verstimmung der Balgeigenresonanz erfolgt.

Die Vorspannung des Außengeflechtsschlauchs gegenüber dem Leitungsteil führt außerdem dazu, daß aufgrund der ständigen und elastisch nachgiebigen Anlage bei Lastwechseln oder Schwingungsamplituten ein Geflechtsschlagen verhindert wird, das üblicherweise nicht nur mit hoher Geräuschentwicklung, sondern auch mit einer entsprechend großen Beanspruchung des Geflechts verbunden ist.

Die weiche Gestaltung des Geflechtsschlauchs erzeugt infolge der hierbei verwendeten besonderen Schlauchcharakteristiken wie Bedeckungsgrad, Drähteanzahl und Drähtequerschnitt eine deutliche Gewichts- und somit auch Kostenreduzierung, da sich diese Größen entsprechend den geringeren Anforderungen an die Tragfähigkeit des Schlauches reduzieren lassen. Die hierbei erzielte relativ lose Einbindung des Schlauches führt außerdem dazu, daß er nicht nur in Druckrichtung, sondern nun auch in Zugrichtung axial nachgiebig ist und somit das Leitungsteil in seiner Gesamtbeweglichkeit nicht einschränkt.

Hierbei kommt die Erfindung grundsätzlich mit den bereits üblichen Bauteilen aus, so daß sich insoweit insbesondere keine Gewichtsvermehrung des Leitungselementes ergibt. Es kann jedoch je nach den Umständen des Bedarfsfalles auch das Leitungsteil axial hintereinander wenigstens zwei Bälge aufweisen, wobei benachbarte Bälge ggf. einstückig durch ein Zwischenrohr aus Metall miteinander verbunden sind, dessen Innendurchmesser im wesentlichen dem freien Innendurchmesser der angrenzenden Bälge entspricht.

Für eine erste Bauweise, die nicht im Rahmen der Erfindung liegt, kann vorgesehen sein, daß der Außengeflechtsschlauch bei seinem Einbau in das Leitungselement durch axiales Stauchen partiell zu einem gegenüber dem freien Außendurchmesser des Leitungsteiles größeren Außendurchmesser hin bleibend verformt und anschließend nach dieser im wesentlichen im plastischen Bereich liegenden Durchmesservergrößerung eingebaut ist. Diese Maßnahme hat ab einer sich jeweils aus den Parametern des Schlauches ergebenden Mindestlänge des Schlauches die Wirkung, daß sich der Außengeflechtsschlauch zwischen den Bereichen größeren Außendurchmessers zusammenzieht, wodurch je nach Schlauchlänge eine oder mehrere ringförmige Stellen einer reibenden Anlage zwischen Geflechtsschlauch und Leitungsteil gebildet sind.

Damit dieses axiale Stauchen auch zu der gewünschten radialen Querschnittsreduzierung und somit zu der Vorspannung des Außengeflechtsschlauches führt, müssen dessen Parameter besondere Eigenschaften aufweisen: Zunächst einmal sollte der Geflechtswinkel, also der Winkel, den die Geflechtsdrähte gegenüber der Schlauchmittelachse einnehmen, vorzugsweise zwischen etwa 50° und 70° liegen. Gleichzeitig sollte der Schlauch eine Klöppelanzahl von etwa zwischen 36 und 48 aufweisen, wobei die Anzahl der Drähte pro Klöppel insbesondere zwischen etwa 4 und 9 liegen sollte. Schließlich empfiehlt sich ein Bedeckungsgrad des Geflechtsschlauches von etwa zwischen 35 % und 75 %, bezogen auf die Gesamtschlauchoberfläche.

Durch Einhaltung dieser charakteristischen Geflechtsschlauchgrößen läßt sich die erfindungsgemäße Querschnittsreduzierung des Geflechts durch einfaches Stauchen erzielen, ohne daß es hierfür unbedingt besonderer Hilfsmittel bedarf, und zwar weder während des Stauchvorganges noch später in dem eingebauten Zustand, wobei sich die Querschnittsreduzierung und Vorspannung jeweils selbsttätig einstellt.

Aufgrund des Stauchens des Geflechtsschlauches ergibt sich ein weiterer Vorteil, der darin liegt, daß der Geflechtsschlauch nun größere Fertigungstoleranzen aufweisen kann, was seine axiale Länge betrifft; denn durch das Stauchen kann die gewünschte Endlänge derart eingestellt werden, daß vor dem Stauchen etwaige vorhandene Längenabweichungen nicht zum Tragen kommen.

Das Leitungselement der vorliegenden Erfindung kommt darüber hinaus ohne die üblicherweise verwendeten Zusatzbauteile wie z. B. geschlitzte Endhülsen oder Gestrickelagen aus, die bisher dazu verwendet werden, um das vorstehend erwähnte Geflechtsschlagen zu unterdrücken bzw. zu dämpfen.

Nach einer anderen nicht erfindungsgemäßen Bauform kann der Außengeflechtsschlauch mit gezielten Querschnittsreduzierungen versehen werden, insbesondere dann, wenn anstatt von nur einer Querschnittsreduzierung mehrere vorgesehen werden sollen, durch die die Dämpfung des Leitungsteiles noch erhöht wird. Außerdem kann der Außengeflechtsschlauch in sich strukturiert bzw. profiliert ausgeführt sein und hierzu beispielsweise mit insbesondere gleichmäßig über die Schlauchlänge verteilten lokalen Einbeulungen versehen sein. Diese können vorher am Außengeflechtsschlauch durch entsprechende Prägeverfahren angebracht werden und geben die Möglichkeit, die Stellen der reibenden Anlage zwischen Leitungselement und Schlauch nach Lage und Größe genau vorherzubestimmen.

Nach der erfindungsgemäßen Bauform kann vorgesehen sein, daß der Außengeflechtsschlauch mit wenigstens einer sich parallel zu seiner Längsachse erstreckenden Profilwelle versehen ist, wobei jedoch zweckmäßig mehrere solcher Profilwellen gleichmäßig über den Umfang des Außengeflechtsschlauches verteilt angeordnet sind. Solche Profilwellen lassen sich an einem Geflechtsschlauch durch geeignete Umformwerkzeuge mittels dadurch vorgenommener zumindest lokaler plastischer Verformung anbringen. Sie haben die Wirkung, daß nunmehr ein Schlagen des Geflechtsschlauches auf dem Leitungsteil über dessen gesamter Länge unterbunden ist auch dann, wenn das Leitungselement während des Betriebs gestaucht bzw. axial zusammengedrückt wird.

Was das Material des Geflechtsschlauches betrifft, so kann dieser beispielsweise aus Stahl oder Edelstahldraht, Federdraht, Keramikfasern oder hochtemperaturfesten Kunststoff hergestellt sein. Außerdem ist es auch möglich, verschiedene Materialien in einem Klöppel bzw. einem Geflechtsschlauch vorzusehen. Das heißt, daß im Rahmen der vorliegenden Erfindung eine optimale Einstellung der Geflechtseigenschaften mögich ist, wozu sich einerseits unterschiedliche Materialien und andererseits eine unterschiedliche Außengeflechtsgeometrie, das heißt verschiedene Querschnittsreduzierungen an unterschiedlichen Stellen, verwenden lassen.

Was die Ausgestaltung der Anschlußenden und insbesondere die dortige Außenseite des Außengeflechtsschlauchs betrifft, so ist es vorteilhaft, daß die jeweilige Verbindung zwischen Außengeflechtsschlauch und zylindrischen Enden des Leitungsteiles unter Hinzufügung eines von außen spielfrei aufgesetzten und in die feste Verbindung mit einbezogenen Stützringes aus Metall gebildet ist.

Darüber hinaus kann vorgesehen sein, daß das dem gewellten Teil eines anschließenden Balges zugekehrte Ende des jeweiligen Stützringes im wesentlichen konisch aufgeweitet ist, um hier eine Reibkante zwischen Stützring und Geflechtsschlauch zu vermeiden.

Besonders vorteilhaft ist es außerdem, wenn zumindest die erste, insbesondere aber die ersten beiden jeweils neben den zylindrischen Anschlußenden eines Balges gelegenen Außenkrempen des Balges einen reduzierten Außendurchmesser aufweisen, der im wesentlichen jeweils zwischen dem Außendurchmesser des übrigen gewellten Teiles des Balges und dem des benachbarten zylindrischen Anschlußendes liegt. Hierdurch ist nicht nur dafür gesorgt, daß der Durchmesser des Außengeflechtsschlauches nicht sprunghaft von einem Durchmesser auf den anderen Durchmesser übergeht; sondern vor allem wird dem Außengeflechtsschlauch im Bereich der Anschlußenden bereits die gewölbte Außenform vorgegeben, die bis zu der bzw. den Querschnittsreduzierungen fortgesetzt wird.

Schließlich kann für den Außengeflechtsschlauch vorgesehen sein, daß dieser aus korrosions- und temperaturbeständigem Material besteht oder mit diesem insbesondere auf seiner Innenseite beschichtet ist, wobei das Beschichtungsmaterial zweckmäßig Leiteigenschaften aufweist, um den reibenden Verschleiß zwischen Leitungsteil und Schlauch möglichst gering zu halten. Dem gleichen Zweck kann aber auch dienen, daß der Außengeflechtsschlauch unter Hinzunahme von Glasfasern hergestellt und/oder mit einem Glasfasergeflecht oder - gestricke überzogen ist.

Ferner ist es zweckmäßig, daß das mit einem Ende des Außengeflechtsschlauches verbundene zylindrische Anschlußende des Leitungsteiles einen größeren Innendurchmesser aufweist als der wesentliche Teil des übrigen Längenabschnittes des Leitungsteiles. Hiermit läßt sich dieses Ende durch Aufstecken mit der anschließenden Leitung verbinden so, daß der Innenquerschnitt der anschließenden Leitung im wesentlichen dem für die Gasströmung bleibenden Innenquerschnitt des Leitungselementes entspricht.

Das erfindungsgemäße Leitungselement kann außerdem in an sich bekannter Weise dadurch weitergebildet sein, daß das Leitungsteil einen auf der Innenseite des Leitungselementes angeordneten Geflechtsschlauch aus Metall aufweist, und daß ein Ende des inneren Geflechtsschlauch mit einem zylindrischen Enden des Leitungsteiles fest verbunden ist.

Dieser innere Geflechtsschlauch dient dazu, den Abgasstrom innerhalb des Balges zu führen, um auf diese Weise Wirbelbildungen an den Innenkrempen der Balgwellen und damit die Entstehung von Strömungsgeräuschen bzw. Sekundärschall zu verhindern. Gleichzeitig werden auf diese Weise die Innenkrempen der Balgwellen thermisch weniger beansprucht, was zu einer Lebensdauererhöhung des Balges führt.

Wird diese Bauform des Leitungselementes gewählt, so ist es bei gleichzeitiger Anwendung eines zylindrischen Anschlußendes des Leitungsteiles mit vergrößertem Innendurchmesser vorteilhaft, daß die erste neben dem zylindrischen Anschlußende gelegene Innenkrempe des Balges einen Innendurchmesser aufweist, der im wesentlichen zwischen dem Innendurchmesser des zylindrischen Anschlußendes und dem freien Innendurchmesser des Balges liegt. Auf diese Weise wird vom Anschlußende ausgehend der innere Geflechtsschlauch mit bogenförmigem Übergang in den freien Innendurchmesser des Balges geführt, so daß es neben dem Anschlußende nicht zu einer besonderen Beanspruchung durch einen Durchmessersprung kommen kann.

Schließlich kann anstelle des Innengeflechts ein flexibler Agraffschlauch vorgesehen sein, der aus einem durch schraubengangförmiges Wickeln von profilierten Bandlagen hergestellten Metallschlauch besteht und insbesondere zur thermischen Abschirmung des Balges gegenüber dem heißen Abgasstrom dient.

Weitere Merkmale der Erfindung und deren Einzelheiten ergeben sich aus der nachfolgenden Beschreibung von Ausführungsformen, die auf der Zeichnung dargestellt sind. In der Zeichnung zeigen:
- Figur 1: eine nicht erfindungsgemäße Ausbildung eines Leitungselementes insbesondere für Abgas- und Abgasrückführleitungen von Kraftfahrzeugen in Seitenansicht mit teilweisem Axialschnitt;
- Figur 2: eine Abwandlung eines derartigen Leitungselementes ebenfalls in Seitenansicht mit teilweisem Axialschnitt;
- Figur 3: eine erfindungsgemäße Ausbildung eines Leitungselementes in perspektivischer Außenansicht und
- Figur 4: eine axiale Stirnansicht des Leitungselementes gemäß Figur 3.

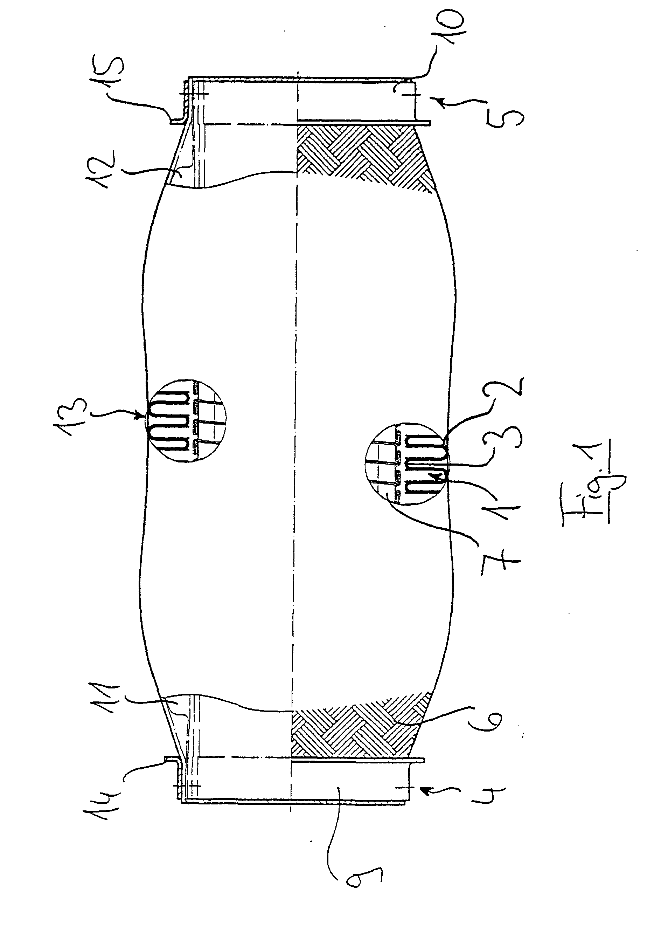

Das Leitungselement gemäß Figur 1 besteht im wesentlichen aus einem Leitungsteil in Form eines ringgewellten Balges 1, wobei die Balgwellen Außenkrempen 2 und Innenkrempen 3 bilden. Der Balg 1 hat zylindrische Anschlußenden 4, 5, wobei auf den Anschlußenden das Ende eines als Ummantelung dienenden äußeren Geflechtsschlauches 6 aus Metall sitzt zusammen mit einem auf der Innenseite des Balges angeordneten flexiblen Agraffschlauch 7 aus Metall, welcher durch Wickeln vorprofilierter Bandlagen hergestellt ist.

Außen ist der Balg 1 mit dem Außengeflechtsschlauch 6 an beiden Enden mit Hilfe äußerer Stützringe 9, 10 mit den zylindrischen Anschlußenden 4, 5 des Balges 1 verbunden.

Die endständige Verbindung der Teile 4, 6, 7 und 9 einerseits sowie der Teile 5, 6, 7 und 10 andererseits kann in üblicher Weise durch Punktschweißen oder durch gegenseitiges radiales Verpressen der genannten Teile von innen nach außen und/oder von außen nach innen hergestellt sein.

Mit den so gebildeten Anschlußenden ist das dargestellte Leitungselement beidseitig auf nicht dargestellte, weiterführende Leitungen aufsteckbar.

Die äußeren Stützringe 9 und 10 sind bezüglich ihrer der Mitte des Balges 1 zugewandten Seite mit einer Aufweitung bzw. Aufbördelung 14, 15 versehen, um hier eine Kantenpressung gegenüber dem äußeren Geflechtsschlauch 6 zu vermeiden.

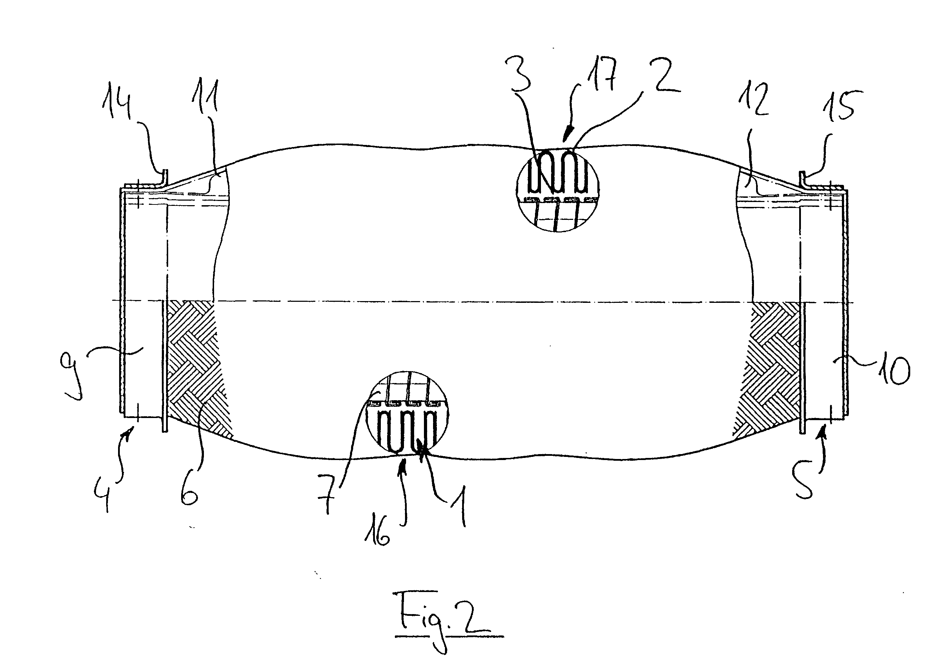

Der soweit geschilderte Grundaufbau des Leitungselementes gemäß Figur 1 kehrt bei der Ausführungsform gemäß Figuren 2 bis 4 wieder, weshalb er insoweit anhand dieser Figuren nicht noch einmal beschrieben ist, sondern unter Verwendung der mit Figur 1 eingeführten Bezifferung weitergilt.

Bei der Ausführungsform gemäß Figur 1 erstreckt sich nun wie auch bei der Ausführungsform gemäß Figur 2 der Außengeflechtsschlauch von dem Anschlußende 4 bis zum Anschlußende 5, wobei sein Durchmesser in dem dazwischen liegenden Bereich nur ungefähr an den freien Außendurchmesser des Balges 1 angepaßt und entsprechend größer ausgeführt ist. Im jeweiligen äußeren Randbereich ist der Metallbalg 1 mit einer ersten Außenkrempe 11, 12 versehen, deren Außendurchmesser ungefähr zwischen dem Außendurchmesser des übrigen gewellten Teiles des Balges und dem des benachbarten zylindrischen Anschlußendes liegt. Auch an diesen Durchmesser ist der Außengeflechtsschlauch 6 angepaßt.

Ansonsten entsprechen sich jedoch der Außendurchmesser des Metallbalges 1 und der Innendurchmesser des Außengeflechtsschlauch 6 nur in einem einzigen Bereich exakt, nämlich im axial mittleren Bereich 13, in dem der Geflechtsschlauch mit einer lokalen, ringförmigen Querschnittsreduzierung versehen ist und hierdurch unter Vorspannung am Balg anliegt. Zwischen den Außenkrempen mit reduzierten Außendurchmesser 11 bzw. 12 und der Querschnittsreduzierung 13 weist der Außengeflechtsschlauch einen bombierten Verlauf auf, in dem er von den Außenkrempen des Metallbalges abgehoben ist.

Wie vorstehend erläutert, befindet sich der Außengeflechtsschlauch im Bereich der lokalen Querschnittsreduzierung 13 in reibender Anlage am Metallbalg, wodurch er zum einen die Eigenfrequenz des Metallbalges verstimmt und insbesondere dessen Schwingung durch die Anlage dämpft. Dies führt in vorteilhafter Weise zu einer starken Geräuschreduzierung.

Die Ausführungsform gemäß Figur 2 unterscheidet sich von der Ausführungsform nach Figur 1 dadurch, daß das dortige Leitungselement mit zwei ringförmigen lokalen Querschnittsreduzierungen 16, 17 versehen ist und somit drei bombierte Abschnitte aufweist, nämlich zwischen der halbhohen Außenkrempe 11 und der ersten Querschnittsreduzierung 16, zwischen der ersten Querschnittsreduzierung 16 und der zweiten Querschnittsreduzierung 17 und zwischen der zweiten Querschnittsreduzierung 17 und der anderen halbhohen Außenkrempe 12.

Es ist offensichtlich, daß bei gleicher Vorspannkraft des Geflechts gegenüber dem Metallbalg die Dämpfung bei der Ausführungsform gemäß Figur 2 noch erhöht ist.

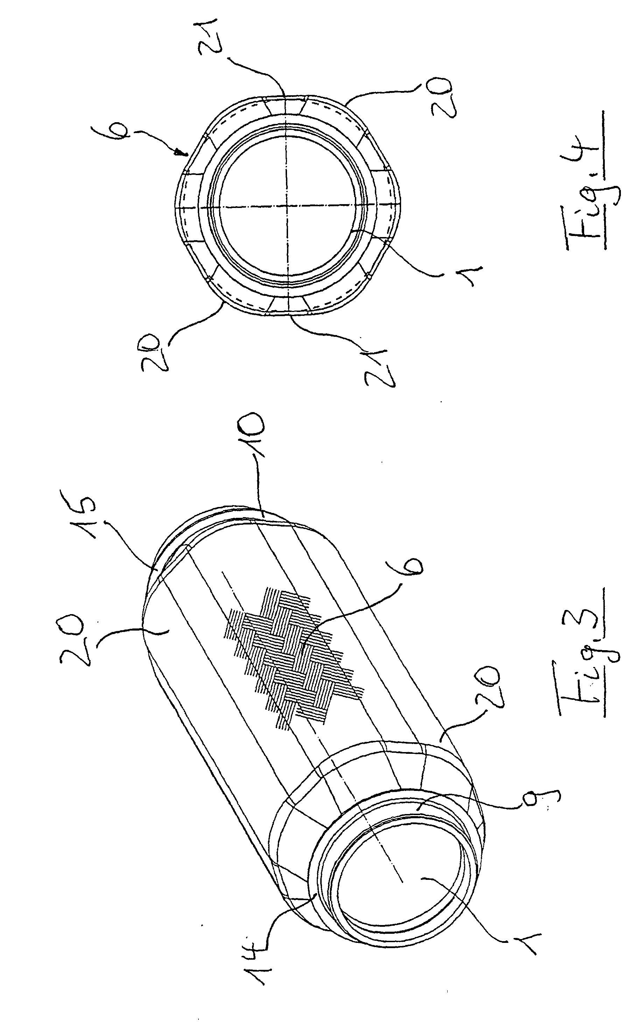

Bei der erfindungsgemäßen Ausführungsform gemäß den Figuren 3 und 4 ist im Gegensatz zu den vorbeschriebenen Bauformen der Außengeflechtsschlauch 6 mit sich parallel zu seiner Längsachse erstreckenden, gleichmäßig über seinen Umfang verteilt angeordneten Profilwellen 20 versehen. Diese haben einen Abstand gegenüber dem Außenquerschnitt des Leitungsteiles 1, während der Geflechtsschlauch 6 mit den zwischen diesen gebildeten, talförmigen Bereichen 21 am Leitungsteil über dessen gesamter Längs anliegt und somit hier die Dampfung bewirkt. Wegen der Anlage von Leitungsteil 1 und Schlauch 6 über deren gesamte Länge ist aber hier auch jegliches gegenseitiges Schlagen dieser Teile sicher verbunden.

Zusammenfassend bietet die vorliegende Erfindung den Vorteil, daß durch die reibende Anlage des Außengeflechtsschlauches am Leitungsteil zum einen eine erhebliche Geräuschreduzierung insbesondere durch Verstimmung der Balg-Eigenfrequenz erreicht und zum anderen durch die ständige elastische Anlage der Effekt des Geflechtsschlagens stark herabgesetzt oder verhindert wird.

Es sei darauf hingewiesen, daß die vorliegende Anmeldung eine Teilanmeldung zu der Stammanmeldung EP-A 98 104 867.1 ist. Die Gegenstände beider Anmeldungen unterscheiden sich wie folgt voneinander: Die Stammanmeldung betrifft die in den Figuren 1 und 2 dargestellte Bauform, bei der der Außengeflechtsschlauch zumindest eine umlaufende, sich senkrecht zu seiner Längsachse erstreckende radiale Querschnittsreduzierung aufweist. Im Gegensatz dazu ist der Gegenstand der vorliegenden Teilanmeldung auf die Variante beschränkt, wie sie beispielhaft in den Figuren 3 und 4 dargestellt ist: Demnach verläuft hier die radiale bzw. die radialen Querschnittsreduzierung/en parallel zur Längsachse des Außengeflechtsschlauchs, also in Axialrichtung. Auf die in der vorliegenden Anmeldung belassenen Ausführungen, die nunmehr die Stammanmeldung betreffen, also auf in Umfangsrichtung verlaufende Querschnittsreduzierungen des Außengeflechtsschlauchs, erstreckt sich der Schutz der vorliegenden Teilanmeldung ausdrücklich nicht.

## Patentansprüche

1. Leitungselement, insbesondere für Abgas- und Abgasrückführleitungen von Verbrennungsmotoren bei Kraftfahrzeugen, mit einem mit zylindrischen Anschlußenden versehenen Leitungsteil (1) aus Metall, das wenigstens einen mit zylindrischen Anschlußenden (4, 5) versehenen, schraubengangförmig oder ringgewellten flexiblen Balg enthält, und einem koaxial zum Balg auf dessen Außenseite angeordneten Geflechtsschlauch (6) aus Metalldraht, wobei Leitungsteil (1) und Außengeflechtsschlauch (6) an gemeinsamen Enden zumindest mittelbar fest miteinander verbunden sind und der Innendurchmesser des Außengeflechtschlauches (6) im wesentlichen dem freien Außendurchmesser des Leitungsteiles (1) entspricht,
**dadurch gekennzeichnet,**
**daß** der Außengeflechtsschlauch (6) durch eine auf ihn infolge einer radialen Querschnittsreduzierung wirkende Vorspannung wenigstens örtlich in reibende Anlage gegen die den freien Außendurchmesser des Leitungsteiles (1) bildenden Wandungen des Leitungsteiles (1) gebracht ist, und daß der Außengeflechtsschlauch (6) mit wenigstens einer sich parallel zu seiner Längsachse erstreckenden Profilwelle (20, 21) versehen ist.

2. Leitungselement nach Anspruch 1,
**dadurch gekennzeichnet,**
**daß** der Außengeflechtsschlauch (6) mit einem Geflechtswinkel von etwa im Bereich zwischen 50° und 70°, bezogen auf die Schlauchachse, gewickelt ist.

3. Leitungselement nach zumindest einem der vorstehenden Ansprüche,
**dadurch gekennzeichnet,**
**daß** der Außengeflechtsschlauch (6) mit einer Klöppelanzahl von etwa im Bereich zwischen 36 und 48 gewickelt ist.

4. Leitungselement nach zumindest einem der vorstehenden Ansprüche,
**dadurch gekennzeichnet,**
**daß** der Außengeflechtsschlauch (6) mit einer Anzahl an Drähten pro Klöppel von etwa im Bereich zwischen 4 und 9 gewickelt ist.

5. Leitungselement nach zumindest einem der vorstehenden Ansprüche,
**dadurch gekennzeichnet,**
**daß** der Außengeflechtsschlauch (6) einen Bedeckungsgrad gegenüber dem Leitungsteil (1) von etwa im Bereich zwischen 35 % und 75 % aufweist.

6. Leitungselement nach Anspruch 1,
**dadurch gekennzeichnet,**
**daß** bei mehreren Profilwellen (20, 21) diese gleichmäßig über den Umfang des Außengeflechtsschlauches (6) verteilt angeordnet ist.

7. Leitungselement nach zumindest einem der vorstehenden Ansprüche,
**dadurch gekennzeichnet,**
**daß** die feste Verbindung von Leitungsteil (1) und Außengeflechtsschlauch (6) unter Hinzufügung eines spielfrei ein- oder aufgesetzten Stützringes (9, 10) gebildet ist.

8. Leitungselement nach Anspruch 7,
**dadurch gekennzeichnet,**
**daß** das dem gewellten Teil des anschließenden Balges (1) zugekehrte Ende des jeweiligen Stützringes (9, 10) im wesentlichen konisch aufgeweitet (14, 15) ist.

9. Leitungselement nach zumindest einem der vorstehenden Ansprüche,
**dadurch gekennzeichnet,**
**daß** die Anschlußenden (4, 5) des Leitungsteiles (1) einen größeren Innendurchmesser aufweisen als der wesentliche Teil des übrigen Längenabschnittes des Leitungsteiles.

10. Leitungselement nach zumindest einem der vorstehenden Ansprüche,
**dadurch gekennzeichnet,**
**daß** zumindest die erste jeweils neben den zylindrischen Anschlußenden (4, 5) des Balges (1) gelegene Außenkrempe (11, 12) des Balges einen reduzierten Außendurchmesser aufweist, der im wesentlichen zwischen dem Außendurchmesser des übrigen gewellten Teiles des Balges und dem des benachbarten zylindrischen Anschlußendes liegt.

11. Leitungselement nach zumindest einem der vorstehenden Ansprüche,
**dadurch gekennzeichnet,**
**daß** der Außengeflechtsschlauch (6) aus korrosions- und temperaturbeständigem Material besteht oder mit korrosions- und temperaturbeständigem Material beschichtet ist.

12. Leitungselement nach Anspruch 11,
**dadurch gekennzeichnet,**
**daß** das Beschichtungsmaterial Gleiteigenschaften aufweist.

13. Leitungselement nach zumindest einem der vorstehenden Ansprüche,
**dadurch gekennzeichnet,**
**daß** der Außengeflechtsschlauch (6) unter Hinzunahme von Glasfasern hergestellt und/oder mit einem Glasfasergeflecht überzogen ist.

14. Leitungselement nach zumindest einem der vorstehenden Ansprüche,
**dadurch gekennzeichnet,**
**daß** der Außengeflechtsschlauch (6) aus oder unter Hinzunahme von Federdraht, Keramikfasern und/oder hochtemeraturfestem Kunststoff hergestellt ist.

15. Leitungselement nach zumindest einem der vorstehenden Ansprüche,
**dadurch gekennzeichnet,**
**daß** das Leitungsteil axial hintereinander wenigstens zwei Bälge aufweist, daß benachbarte Bälge durch ein Zwischenrohr aus Metall miteinander verbunden sind, und daß der Innendurchmesser des Zwischenrohres im wesentlichen dem freien Innendurchmesser der angrenzenden Bälge entspricht.

16. Leitungselement nach zumindest einem der vorstehenden Ansprüche,
**dadurch gekennzeichnet,**
**daß** die Anbindung des Außengeflechtsschlauches (6) beabstandet von den Abschlußenden (4, 5) des Leitungsteils (1) erfolgt.

## Claims

1. Conduit element, in particular for exhaust-gas and exhaust-gas recirculation conduits of internal combustion engines in motor vehicles, with a conduit part (1) which is provided with cylindrical connecting ends and is made from metal and which contains at least one flexible screw-thread-shaped or annularly corrugated concertina provided with cylindrical connecting ends (4, 5), and with a braided hose (6) arranged coaxially to the concertina on the outside of the latter and made from metal wire, the conduit part (1) and the outer braided hose (6) being firmly connected to one another at least indirectly at common ends, and the inside diameter of the outer braided hose (6) corresponding essentially to the free outside diameter of the conduit part (1), **characterized in that** the outer braided hose (6) is brought at least locally into frictional bearing contact against the walls of the conduit part (1) which form the free outside diameter of the conduit part (1) by means of a prestress which acts on the said outer braided hose as a result of a radial reduction in cross section, and **in that** the outer braided hose (6) is provided with at least one profile wave (20, 21) extending parallel to its longitudinal axis.

2. Conduit element according to Claim 1, **characterized in that** the outer braided hose (6) is wound with a braiding angle approximately in the range of between 50° and 70° with respect to the hose axis.

3. Conduit element according to at least one of the preceding claims, **characterized in that** the outer braided hose (6) is wound with a number of bobbins approximately in the range of between 36 and 48.

4. Conduit element according to at least one of the preceding claims, **characterized in that** the outer braided hose (6) is wound with a number of wires per bobbin approximately in the range of between 4 and 9.

5. Conduit element according to at least one of the preceding claims, **characterized in that** the outer braided hose (6) has a degree of covering with respect to the conduit part (1) approximately in the range of between 35% and 75%.

6. Conduit element according to Claim 1, **characterized in that**, in the case of a plurality of profile waves (20, 21), these are arranged so as to be distributed uniformly over the circumference of the outer braided hose (6).

7. Conduit element according to at least one of the preceding claims, **characterized in that** the firm connection of the conduit part (1) and outer braided hose (6) is formed by the addition of a supporting ring (9, 10) inserted or placed on so as to be free of play.

8. Conduit element according to Claim 7, **characterized in that** that end of the respective supporting ring (9, 10) which faces the corrugated part of the adjacent concertina (1) is widened essentially conically (14, 15).

9. Conduit element according to at least one of the preceding claims, **characterized in that** the connecting ends (4, 5) of the conduit part (1) have a larger inside diameter than the essential part of the remaining length portion of the conduit part.

10. Conduit element according to at least one of the preceding claims, **characterized in that** at least the first outer rim (11, 12) of the concertina (1), the said outer rim being located in each case next to the cylindrical connecting ends (4, 5) of the concertina, has a reduced outside diameter which lies essentially between the outside diameter of the remaining corrugated part of the concertina and that of the adjacent cylindrical connecting end.

11. Conduit element according to at least one of the preceding claims, **characterized in that** the outer braided hose (6) consists of corrosion-resistant and temperature-resistant material or is coated with corrosion-resistant and temperature-resistant material.

12. Conduit element according to Claim 11, **characterized in that** the coating material has sliding properties.

13. Conduit element according to at least one of the preceding claims, **characterized in that** the outer braided hose (6) is produced by the addition of glass fibres and/or is covered with a glass-fibre braiding.

14. Conduit element according to at least one of the preceding claims, **characterized in that** the outer braided hose (6) is produced from or by the addition of spring wire, ceramic fibres and/or plastic resistant to high temperature.

15. Conduit element according to at least one of the preceding claims, **characterized in that** the conduit part has at least two concertinas axially one behind the other, **in that** adjacent concertinas are connected to one another by means of an intermediate tube made from metal, and **in that** the inside diameter of the intermediate tube corresponds essentially to the free inside diameter of the adjoining concertinas.

16. Conduit element according to at least one of the preceding claims, **characterized in that** the tie-up of the outer braided hose (6) takes place at a distance from the connecting ends (4, 5) of the conduit part (1).

## Revendications

1. Elément de tuyau, en particulier pour des tuyauteries d'échappement et de recyclage de gaz d'échappement de moteurs à combustion interne pour des véhicules, avec une partie tuyau (1) en métal munie d'extrémités de raccordement cylindriques, comprenant au moins un soufflet f lexible en forme de pas de vis ou ondulé muni d'extrémités de raccordement cylindriques (4, 5) et un tuyau souple tressé en fil métallique (6) disposé coaxialement par rapport au soufflet et sur le côté extérieur de celui-ci, la partie tuyau (1) et le tuyau souple tressé extérieur (6) étant reliés l'un à l'autre de manière fixe au moins indirectement à des extrémités communes et le diamètre intérieur du tuyau souple tressé extérieur (6) correspondant sensiblement au diamètre extérieur libre de la partie tuyau (1),
**caractérisé en ce que**
le tuyau souple tressé extérieur (6) est mis en contact frottant au moins localement contre les parois de la partie tuyau (1) formant le diamètre extérieur libre de la partie tuyau (1) par une précontrainte qui lui est appliquée par une réduction radiale de sa section transversale, et **en ce que** le tuyau souple tressé extérieur (6) est muni d'au moins une ondulation de profil (20, 21) s'étendant parallèlement à son axe longitudinal.

2. Elément de tuyau selon la revendication 1,
**caractérisé en ce que**
le tuyau souple tressé extérieur (6) est tressé avec un angle de tresse situé approximativement dans la plage entre 50° et 70° par rapport à l'axe du tuyau souple.

3. Elément de tuyau selon au moins l'une des revendications précédentes,
**caractérisé en ce que**
le tuyau souple tressé extérieur (6) est tressé avec un nombre de fuseaux situé approximativement dans la plage entre 36 et 48.

4. Elément de tuyau selon au moins l'une des revendications précédentes,
**caractérisé en ce que**
le tuyau souple tressé extérieur (6) est tressé avec un nombre de fils par fuseau situé approximativement dans la plage entre 4 et 9.

5. Elément de tuyau selon au moins l'une des revendications précédentes,
**caractérisé en ce que**
le tuyau souple tressé extérieur (6) présente un degré de recouvrement par rapport à la partie tuyau (1) situé approximativement dans la plage entre 35 % et 75 %.

6. Elément de tuyau selon la revendication 1,
**caractérisé en ce que**
dans le cas de plusieurs ondulations de profil (20, 21), celles-ci sont disposées de manière régulièrement répartie sur la périphérie du tuyau souple tressé extérieur (6).

7. Elément de tuyau selon au moins l'une des revendications précédentes,
**caractérisé en ce que**
la liaison fixe entre la partie tuyau (1) et le tuyau souple tressé extérieur (6) est formée par adjonction d'un anneau d'appui (9, 10) placé sans jeu à l'intérieur ou à l'extérieur.

8. Elément de tuyau selon la revendication 7,
**caractérisé en ce que**
l'extrémité de chaque anneau d'appui (9, 10) orientée vers la partie ondulée du soufflet (1) adjacent est sensiblement évasée (14, 15).

9. Elément de tuyau selon au moins l'une des revendications précédentes,
**caractérisé en ce que**
les extrémités de raccordement (4, 5) de la partie tuyau (1) présentent un diamètre intérieur supérieur à la partie principale de la section longitudinale restante de la partie tuyau.

10. Elément de tuyau selon au moins l'une des revendications précédentes,
**caractérisé en ce que**
au moins chaque premier repli extérieur (11, 12) du soufflet disposé respectivement à côté des extrémités de raccordement cylindriques (4, 5) du soufflet (1) présente un diamètre extérieur réduit, qui se situe sensiblement entre le diamètre extérieur du reste de la partie ondulée du soufflet et celui de l'extrémité de raccordement cylindrique voisine.

11. Elément de tuyau selon au moins l'une des revendications précédentes,
**caractérisé en ce que**
le tuyau souple tressé extérieur (6) est réalisé en une matière résistante à la corrosion et aux hautes températures, ou est revêtu d'une matière résistante à la corrosion et aux hautes températures.

12. Elément de tuyau selon la revendication 11,
**caractérisé en ce que**
la matière du revêtement présente des propriétés de glissement.

13. Elément de tuyau selon au moins l'une des revendications précédentes,
**caractérisé en ce que**
le tuyau souple tressé extérieur (6) est réalisé avec adjonction de fibres de verre et/ou est revêtu d'une tresse en fibres de verre.

14. Elément de tuyau selon au moins l'une des revendications précédentes,
**caractérisé en ce que**
le tuyau souple tressé extérieur (6) est réalisé en ou avec adjonction de fil d'acier à ressort, de fibres céramiques ou de matière synthétique résistante aux hautes températures.

15. Elément de tuyau selon au moins l'une des revendications précédentes,
**caractérisé en ce que**
la partie tuyau comporte au moins deux soufflets disposés axialement l'un derrière l'autre, **en ce que** des soufflets adjacents sont reliés l'un à l'autre par un tuyau intermédiaire en métal, et **en ce que** le diamètre intérieur du tuyau intermédiaire correspond sensiblement au diamètre intérieur libre des soufflets adjacents.

16. Elément de tuyau selon au moins l'une des revendications précédentes,
**caractérisé en ce que**
la fixation du tuyau souple tressé extérieur (6) est réalisée à distance des extrémités de raccordement (4, 5) de la partie tuyau (1).
